# EUROPEAN PATENT SPECIFICATION

(11) **EP 1 196 229 B1**
(45) Date of publication and mention of the grant of the patent: **31.12.2008**
(21) Application number: 00943014.1
(22) Date of filing: 21.06.2000
(51) Int. Cl.: B01D 35/30, B01D 63/08

(54) **FILTRATION DEVICES COMPRISING A SEALING GASKET**
FILTEREINRICHTUNGEN MIT EINER DICHTUNG
DISPOSITIF D'ETANCHEITE POUR APPAREIL DE FILTRATION

(30) Priority: 22.06.1999 US 140408 P
(43) Date of publication of application: 17.04.2002
(73) Proprietor: MILLIPORE CORPORATION, Bedford, MA 01730-2271 (US)
(72) Inventor: BARTLETT, Andrew, Lowell, MA 01852 (US); CHISHOLM, Mark, Boston, Massachusetts 02113 (US)
(74) Representative: Henkel, Feiler & Hänzel
(86) International application number: PCT/US2000/017076
(87) International publication number: WO 2000/078429

(56) References cited:
- EP-A- 0 470 440
- US-A- 5 034 124
- US-A- 5 230 812
- US-A- 5 445 737

## Description

The present invention relates to filtration devices. More particularly, it relates to the use of an integrally formed seal on or in a filtration device.

### BACKGROUND OF THE INVENTION

The use of filtration devices is well known. Typically, these are used to filter liquids that contain various molecules that are desired to be removed from the liquid. Three basic designs are used. A flat sheet disk-shaped membrane in a holder, a cylindrical (pleated or unpleated or spiral wound) cartridge and a cassette with one or more flat filters.

In the disk membrane format, a membrane is held in a liquid tight arrangement about the periphery between a top and bottom holder plate. The seal is formed by flat surfaces of the holders, a knife edge arrangement on the holder surfaces on one or both sides of the membrane.

In the cartridge format, silicone gaskets, adhesives such as epoxies or urethanes, heat sealing or solvent bonding methods are often used to form the liquid tight seal between the core and the outlet, the ends of the filter element such as the attachment of end caps to one or both ends of a pleated filter, and other places where a liquid tight seal is required.

In cassette formats, the liquids are filtered within a plurality of filter modules that are stacked between manifolds or individually sealed to a manifold plate. Each module contains one or more filter layers separated by appropriate spacers layers such as screens and an impermeable outer layer on each outer surface of the module. At one or both ends of the modules are a series of ports that permit liquid feed to flow into the apparatus as well as filtrate and retentate to flow from the apparatus. It may be run in either a tangential flow (TFF, including HPTFF) manner or in a dead end or normal flow (NF) manner.

In a TFF operation, a fluid is fed from the feed port(s) to the space between the feed screen and filter and flowed across the face of the filter in a direction tangential to the flow of filtrate through the filter.

In a NF operation fluid is flowed directly at the filter surface and that fluid which is capable of passing through the membrane does so and the rest is left on the upstream side of the membrane.

Some modules have been sealed by injection molding complete cassettes into a uniform device, see US 5,824,217. However, to use these modules one needs to acquire new manifold equipment that is an expensive capital investment. Most cassettes use a stacked manifold design held between two liquid impervious holder plates, typically made of stainless steel, The cassette modules typically have the filtrate side sealed from the retentate side of the cassette by adhesives, in particular epoxy or urethane adhesives. In addition to using the adhesive as the sealing means, it is also applied around one or more of the fluid ports, in particular the feed screen port to create a gasket that separates the feed port from the retentate and/or filtrate ports. At the current time, such gaskets are simply the same height as the screen itself and for many applications this has been sufficient. The system relies upon a compression seal to maintain integrity and prevent leakage between the various ports.

However, in some processes this type of seal is not sufficient. For example where the process calls for the use of alternating of hot and cold fluid cycles, it has been found that the seal is often insufficient and tends to leak. Likewise, when using compressible membranes such as reinforced composite cellulosic membranes, especially at higher pressures (>344.7 kPa) (>50psi), the seal fails due to the compression of the membrane by the pressure of the fluid which allows for leakage.

In all three formats, the above methods of providing a seal or gasket have been less then satisfactory.

Adhesives are undesirable since they have limited chemical compatibility, are a source of significant extractable species, introduce process control difficulties, impose bond strength limitations, impose use temperature limitations and increase process cycle time.

Direct heat sealing wherein a heating element contacts a material which flows to form a seal is undesirable since its use imposes a limitation upon the thickness of the material being heat sealed. This results in a material reduction of the number of layers that can be present in a given volume of the filtration device, thereby undesirably reducing the filtration capacity of the device. In addition, direct heat sealing is undesirable because it requires multiple steps, imposes material compatibility limitations and requires a substrate to effect direct heat sealing of filtration elements.

Solvent bonding is undesirable since solvents impose environmental limitations on liquids to be filtered.

In addition, the use of materials such as polysilicone based materials as sealing materials, O-rings or gaskets is undesirable as they absorb a portion of a feed being filtered into their structure and then allow the absorbed material to be desorbed into subsequently filtered samples thereby contaminating them. Additionally, these free standing gaskets often fall out of the device during installation or repair or replacement and often are improperly seated which causes them to leak. Moreover, loose fitting seals such as O-rings create dead space behind the gasket sealing surface (such as between the inner wall of the O-ring and the wall of the filter housing to which it is attached). This dead space is a breeding ground for bacteria, molds, viruses and yeasts, all of which compromise the sterility and integrity of the seal and the filtration device.

What is required is a better material and method for the construction of sealing materials, O-rings and gaskets for all of these devices.

US-A-5034124, on which the preamble portion of claim 1 is based, describes a filter plate element and a filter comprising such element. The filter plate is longitudinally partitioned between its inlet and outlet ends and has liquid feed and collection troughs at the respective ends. A gasket element is disposed in a groove formed in a top surface of the plate to ensure positive liquid-tight sealing of the plate against a filter element.

US-A-5445737 describes an apparatus for diffusion analysis in which an anion exchange membrane is sandwiched between upper and lower stacks of gaskets provided with holes forming chambers when the gaskets are aligned in superposition.

### SUMMARY AND OBJECTS OF THE INVENTION

The present invention provides a filtration device as defined in claim 1 and a filtration module defined in claim 8 employing such filtration devices as feed and filtrate screens. Preferred embodiments are defined in the dependent claims.

The present invention relates to the formation of a seal around a filtration element to be sealed, such as one or more fluid ports in a filtration module. The use of thermoplastic materials, especially those that can be injection molded in place are preferred as it forms an integral, sanitary gasket or seal. The claimed materials are low in extractables and absorption/desorption of filtration fluids making them cleaner to use and ensuring that the sealing material does not add or remove any constituent of the fluid being filtered other than that desired by the filter action of the device (such as particulates, bacteria and viruses). Moreover, as the sealing device is molded in place , it prevents the seal from moving or be being improperly aligned upon sealing ensuring that the seal is always consistently the same. Lastly, in the molded in place embodiments, the seal has no dead space behind it in which microorganisms might otherwise grow.

In a cassette device, the seal is formed on at least one side and preferably on both sides of the component such as a screen and is proud of or raised above the surface of the component. The seal is molded to the component, preferably it is injection molded to the component. The seal is formed of any elastomeric material such as thermoplastic polymer, copolymer or terpolymer, thermoplastic elastomers, thermosets such as urethane, especially closed cell foamed urethane, and rubber, both natural and synthetic. The molded seal provides better sealing, allows for a variation in heights and geometries, and provides better cleanliness and lower extractables than the currently used adhesives.

It is an aspect of the present invention to provide a seal for a filter device comprised of a thermoplastic elastomer.

It is a further aspect of the present invention to provide a sealing means for a filtration device wherein the sealing means is formed of a thermoplastic elastomer that is molded in place on to the filter device.

It is another aspect of the present invention to provide a filtration module comprising at least one membrane layer, at least one feed screen layer and at least one filtrate screen, said at least one feed screen layer and said at least one filtrate layer having one or more ports formed in at least one of its edges and said layers being arranged on opposite sides of the membrane to insure fluid flows through a port on the feed screen layer into the feed screen layer, from the feed screen layer through the membrane and into the filtrate layer and through the one or more ports of the filtrate layer to an exit from the module, wherein the one or more ports of at least the feed screen and filtrate layer contain a molded seal which has a thickness greater than that of the screen and said thickness of said seal extends from at least one side of said layer.

Preferably the seal extends from about 0.0254 to about 0.381mm above the at least one side, preferably at least 0.0508 mm and more preferably at least 0.127mm above the side.

It is a further aspect of the present invention to provide a filtration module comprising two outermost end cap layers which are impermeable to liquids and can be either metal or plastic holders which retain the module in place or plastic films which form the outer layers of the module, one or more screen layers inside of the end caps, one or more filter layers inside the one or more screen layers, wherein at least one screen layer is a feed layer and contains a series of one or more feed stream ports in at least one of its peripheral edges, said feed stream ports being sealed by a molded seal which has a thickness greater than that of the screen and said thickness of said seal extends from at least one side of said screen.

### IN THE DRAWINGS

Figure 1 shows a cross sectional view of a first embodiment of the present invention.
Figure 2 shows a cross sectional view of a second embodiment of the present invention.
Figure 3 shows a planar top view of either the first or second embodiments as shown in Figures 1 and 2.
Figure 4 shows the second embodiment of the present invention in a TFF module in cross sectional view.
Figure 5 shows another embodiment of the present invention in a TFF module in cross sectional view.
Figure 6 shows another embodiment of the present invention designed specifically in a normal flow (NF) configuration.
Figure 7 shows an endcap layer with an injection molded rim which in conjunction with an adjacent layer forms an open volume or space which acts as a screen
Figure 8 the use of gaskets according to the present invention in conjunction with connecting a filter device to the manifold plates of a cassette format.
Figure 9 shows a graph of the test results of Example 1.

### DETAILED DESCRIPTION OF THE INVENTION

The present invention relates to a sealing device such as a potting of a membrane, a seal edge on a membrane or a screen or a support layer surrounding the membrane or other component of a filter device, a gasket on a membrane port or outer edge or a screen port, and other similar sealing components typically used in the manufacture of filtration devices.

The present invention uses selected materials for the sealing devices which have an ease of formation and application, low extractables, low absorption/desorption of components from the fluid being filtered. These materials include any elastomeric material such as a thermoplastic polymer, copolymer or terpolymer, thermoplastic elastomers, thermosets such as urethanes, especially closed cell foamed urethane, and rubber, both natural and synthetic.

In a preferred embodiment, the sealing device is injection or insert molded or otherwise integrally formed (by bonding, etc) to a component of the device, especially a plastic or other comparable material (glass mesh, woven fabric, etc.) to which the seal can bond and be retained. In this way, one obtains an integral seal on the device which has several advantages in the ease of assembly and use, the assurance that the seal is always retained at the right location and cannot be mis-aligned or mis-sealed. Additionally, in these molded in place embodiments, the seal eliminates any dead space between the seal and the filter component to which it is bonded in which a microorganism such as a bacteria, yeast, mold or virus could otherwise grow and threaten the integrity and sanitary condition of the filter.

The present invention will now be explained in relation to several of the preferred embodiments, in particular in relation to an embodiment of the invention used on screens of a cassette type filtration device. However, through these illustrations, it is not meant to limit the invention to those particular embodiments.

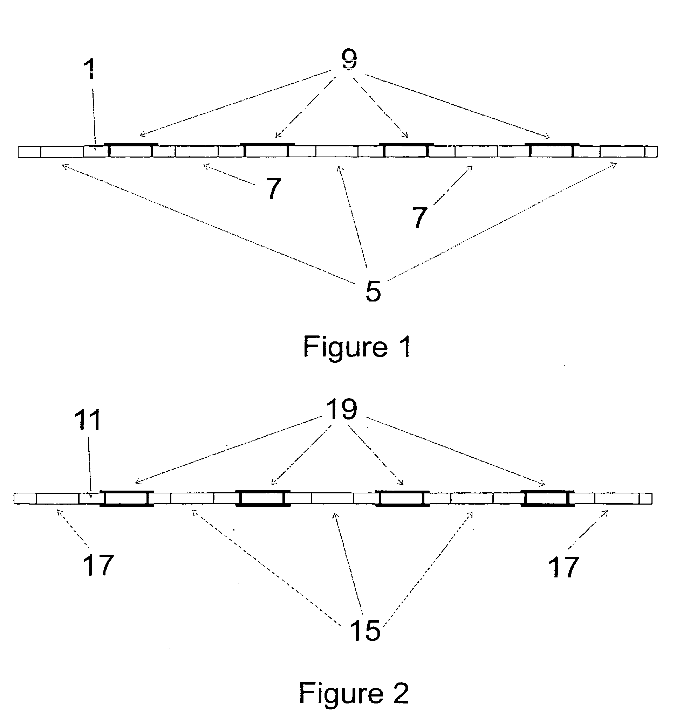

Figure 1 shows a first embodiment of the present invention. It shows a feedscreen for a cassette filtration device. The feedscreen 1 has a series of ports 3, 5 and 7 which correspond to the feed, retentate and filtrate ports of the filtration device. As shown, the ports 3 have a gasket 9 formed around them to isolate them from the other ports. In this embodiment, the ports 3 are the filtrate ports of the feed screen so as to keep feed fluid separate from the filtrate. As shown, the gaskets 9 are formed through the screen and are proud or raised above the surface of the screen on one side only.

Figure 2 shows a second embodiment of the present invention. The feedscreen 11 has a series of ports 13,15 and 17 that correspond to the feed, retentate and filtrate ports of the device. As shown, the ports 13 have a gasket 19 formed around them to isolate them from the other ports. As shown it is formed through the screen and is proud or raised above both major surfaces of the screen.

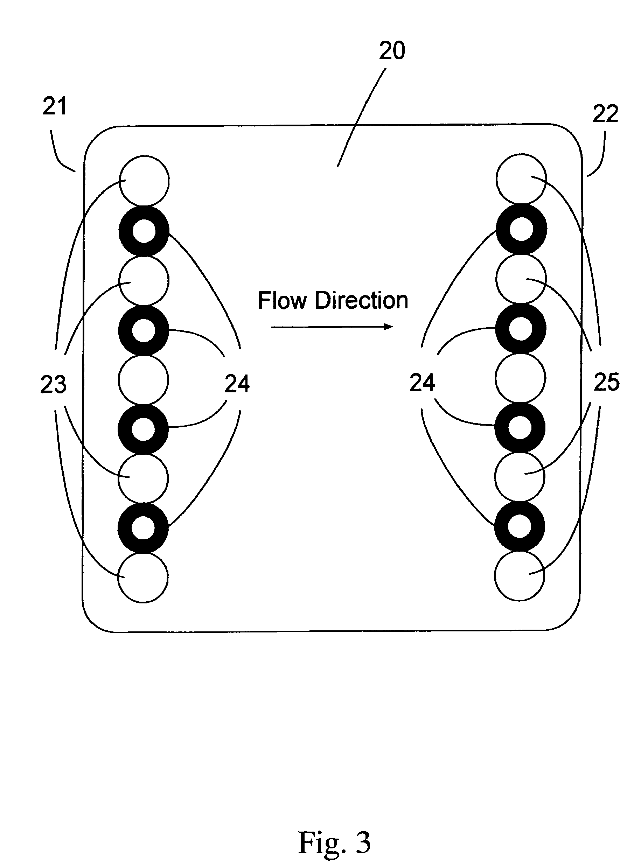

Figure 3 shows a planar top down view of either embodiment of Figures 1 or 2. As shown, a feed screen 20 has a feed side 21 and a retentate side 22. Fluid flows across the screen from the feed side 21 to the retentate side 22. There are five ungasketed feed ports 23 and four gasketed filtrate ports 24 on the feed side 21. Likewise there are four gasketed filtrate ports 24 and five ungasketed retentate ports 25 on the retentate side 22 of the screen 20. The gaskets surround and isolate the selected ports 24 from the other ports 23,25. For a filtrate screen, the gaskets would be formed around the feed and retentate ports and the filtrate ports would left ungasketed.

While shown as a circular design, it is understood that the gasket merely needs to surround the fluid port and may be of any geometric design such as irregular, circular, oval, ellipsoid, triangular or polygonal (square, rectangular, pentagonal, hexagonal, octagonal, decagonal, etc). The design selected is at the discretion of the designer so long as it doesn't interfere with any function of the device.

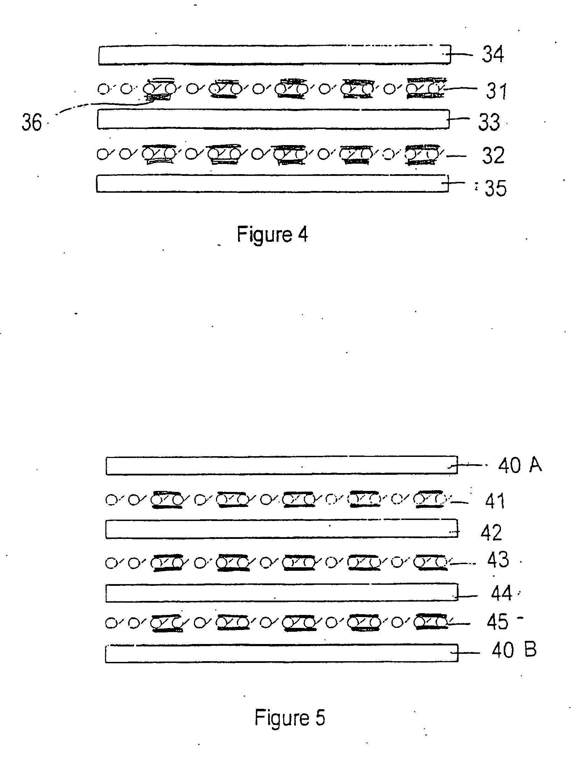

Figure 4 shows a cross section of a filtration module according to the present invention in its simpler form. A feed screen 31 and a filtrate screen 32 are positioned on opposite sides of a membrane 33. A first and second endcap layer 34 and 35 are located adjacent to and outside of the screens 31 and 32 to complete the package. The endcaps 34 and 35 may be the endplates of the filtration device such as stainless steel or plastic plates or separate layers formed as part of the module as described in US Patent 5,824,217. As shown, the gaskets 36 maintain the seal between the feed screen 31 and membrane 33 and filtrate screen 32 and membrane 33 respectively for the desired ports. In this embodiment, fluid flows into the feed screen 31 through one or more non-gasketed ports formed in the screen 31 and which are connected to a source of fluid to be filtered. A portion of the fluid passes through the membrane 33 and the filtrate is removed from the module from one or more ports formed in the filtrate screen 32.

Figure 5 shows a cross section of a TFF module according to the present invention in a preferred form. The outer portions of the module are comprised of a first and second endcap layers 40 A and B. A first feed screen 41 is position inward of and adjacent to the endcap layer 40A. A first membrane layer 42 is position inward of and adjacent to the first feedscreen 41.Inward of that is a filtrate screen 43. Below that is a second membrane layer 44 followed by a second feedscreen 45 and the other endcap 40B which forms the other outer end of the module. Fluid flows from the feed screens 41 and 45 through one or more feed ports and through the membranes 42 and 44 to the filtrate screen 43. From there, the fluid is removed for further processing.

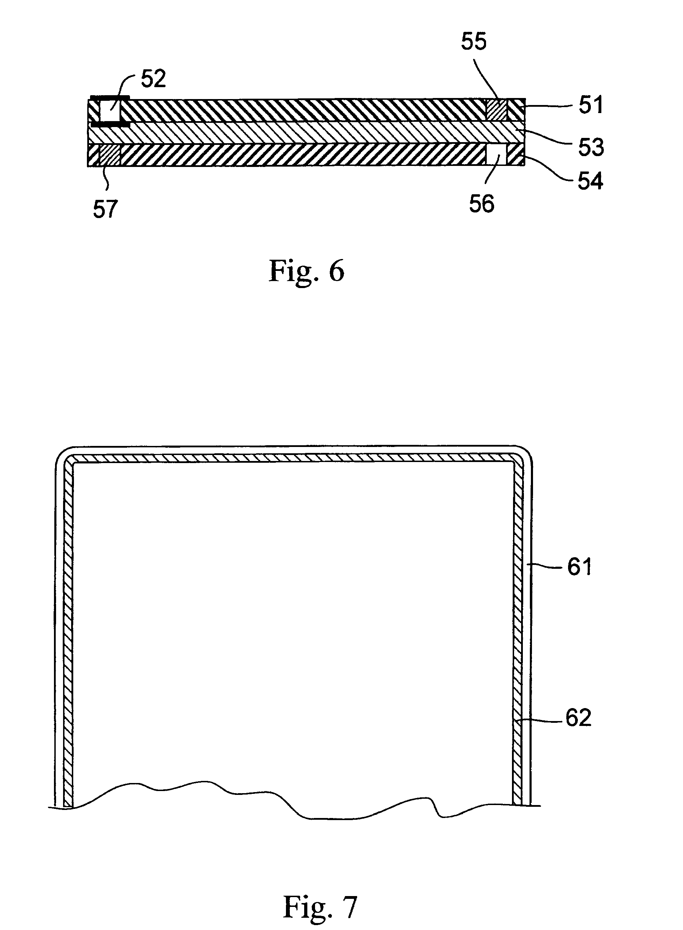

Figure 6 shows a NF or normal flow module. In this module, a feed screen 51 has one or more ports 52 located on one end of the screen. Fluid enters through these ports and a portion passes through the membrane 53 and is collected in the filtrate screen 54. The fluid which does not pass through the membrane remains upstream of the membrane as the retentate port 55 as shown has been sealed so as to prevent any tangential flow. The filtrate exits the device through one or more filtrate ports 56 formed on the end of the filtrate screen 54 opposite of the open port(s) 52 of the feed screen 51. The one or more filtrate ports 57 below the open feed ports 52 have been also been sealed to prevent any channeling or tangential flow from occuring.

If desired, other arrangements may be made, such as using a central feedscreen and outer permeate and/or filtrate screens, additional filter layers, etc. Numerous variations can be made to combine the membranes and spacer (feed and retentate screen) layers to form workable devices. Additionally, the screens and modules of the present invention may as discussed above be used in tangential flow filtration devices or in dead end or normal flow filtration devices. See U.S. 5,824,217 for such variations.

The screen be it a feed screen, filtrate screen or retentate screen may basically be a porous single layer

Figure 7 shows an endcap 61, such as is made of a a nonporous polyethylene sheet on which a rim 62 has been injection molded to form such a space when assembled next to another layer such as a membrane.

While the invention has been largely explained in reference to a first preferred embodiment relating to the screens of a cassette type filtration device, its use is not so limited.

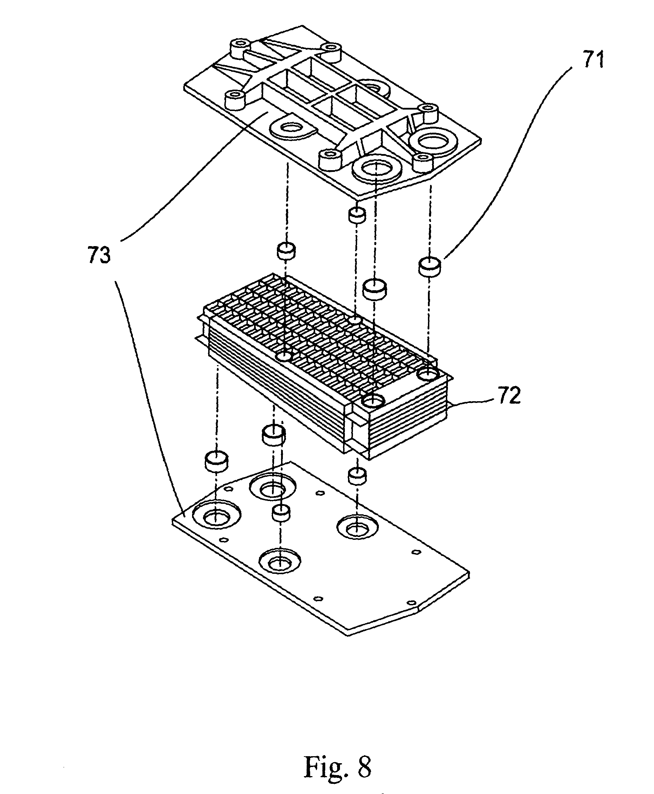

The invention may also be used to form gaskets 71 used to connect the filter device 72 to the manifold plate 73 as shown in Figure 8. These gaskets are formed in place so as to ensure that they do not dislodge from the device during assembly or become mis-aligned during assembly and thereby mis-sealed. If the seal is formed on a structure which is reused, it is preferred that the bond to the component be sufficient to ensure that the seal stays in place during normal use and handling, but is capable of being removed and replaced as is needed over time.

The screen, if used, may alternatively be a woven, nonwoven or porous structure such a as a woven polyethylene, polypropylene, fiberglass, glass, carbon or polyester screen, a nonwoven screen such as spun bonded fabric or TYVEK® or TYPAR ® paper. It may also be in the form of a scrim or as a porous film such as a highly porous membrane. Alternatively, it may be made from a film in which a series of holes, channels or openings are formed or it may be made of a cast grid like structure.

The membrane may be a microporous, ultrafiltration (UF), nanofiltration or reverse osmosis membrane formed of a polymer selected from olefins such as polyethylene including ultrahigh Molecular weight polyethylene, polypropylene, EVA copolymers and alpha olefins, metallocene olefinic polymers, PFA, MFA, PTFE, polycarbonate, vinyl copolymers such as PVC, polyamides such as nylon, polyesters, cellulose, cellulose acetate, regenerated cellulose, cellulose composites, polysulphone, polyethersulphone, polyarylsulphone, polyphenylsulphone, polyacrylonitrile, polyvinylidene fluoride (PVDF), and blends thereof. The membrane selected depends upon the application, desired filtration characteristics, particle type and size to be filtered and the flow desired.

The other filter components such as end caps, inlets, outlets, housings, spacers, retainers, manifolds, capsules, etc., to which a seal of the present invention may be applied, can be made of a variety of materials, such as metal, ceramic, glass or plastic. Preferably, the components are formed of metal such as stainless steel, especially 316 stainless steel or aluminum due to their relatively low cost and good chemical stability or more preferably plastics, such as polyolefins, especially polyethylene and polypropylene, homopolymers or copolymers, and ethylene vinyl acetate (EVA) copolymers; polycarbonates; styrenes;, PTFE resin; thermoplastic perfluorinated polymers such PFA; nylons and other polyamides; PET and blends of any of the above. By using a molded in place seal, it is preferred that the component to which the seal is bonded be compatible with and ensure a good adhesion between the components so that the seal remains as an integral part of the component to which it is bonded.

The seal is formed of any elastomeric material. The material does not need to be very elastic but it should have some ability to maintain the seal with the adjacent layers during flexion or compression. Preferably it has a durometer of from about 60 to about 100. Suitable materials include but are not limited to thermoplastics, such as polyethylene, polypropylene, EVA copolymers, alpha olefins and metallocene copolymers, PFA, MFA, polycarbonate, vinyl copolymers such as PVC, polyamides such as nylon, polyesters, acrylonitrile-butadienestyrene (ABS), polysulphone, polyethersulphone, polyarylsulphone, polyphenylsulphone, polyacrylonitrile, polyvinylidene fluoride (PVDF), and blends thereof, thermoplastic elastomers such Santoprene® polymer, EPDM rubber , thermosets such as closed cell foamed urethanes, and rubbers, either natural or synthetic.

It is preferred that the material be a thermoplastic or thermoplastic elastomer so as to allow for its use in the preferred method of this invention, injection molding. One such preferred material is a SANTOPRENE® polymer with a durometer of about 80 available from Advanced Elastomer Systems of Akron, Ohio. Preferred thermoplastics include low density, linear low density, medium density and high density polyethylene, polypropylene and EVA copolymers.

The seal is formed by molding of seal to a portion or component of the device. Preferably, the seal is injection molded to the component. Thermoplastic elastomers and thermoplastics are preferred for the injection molding process although thermosets, such as rubber or urethane may be used. The gasket may be formed on one or both sides of the screen as desired. Preferably it is formed as one injection-molded piece on both sides of screen. To form soch a gasket, two molds each corresponding to a half of the final gasket design are made and placed on opposite sides of feed screen in alignment with each other. Thermoplastic elastomers or molten thermoplastic or other selected seal material is then injected into either one or both mold pieces and fills the mold with the seal material, thus forming the desired gasket in place on the screen.

A module according to the present invention is typically formed in the following manner: a screen, preferably a feed screen is formed with a series of ports in at least one, preferably both of its outermost edges opposite each other. Seals according to the present invention are formed and secured around the desired ports.

In a tangential flow filtration apparatus using the screen or module containing such screen of the present invention, the feed, retentate and filtrate ports are arranged so that the incoming fluid feed to the apparatus enters at least one feed channel, passes through the feed screen layer(s) and either passes through a membrane to form a filtrate stream or is retained by a membrane to form a retentate stream. The retentate stream is removed from the device through the one or more retentate ports and the filtrate stream is removed through the one or more filtrate ports. If desired, one or more filtrate inlet ports and one or more filtrate outlet ports can be formed so that some filtrate is recycled to the filtrate layer inlet port to effect tangential flow on the filtrate side. This may also be done on the retentate side instead of on the filtrate side or on both sides to increase tangential flow efficiency of the device. By doing so, one may control the transmembrane pressure within the device.

In a dead end flow filtration apparatus of the present invention, the feed and filtrate ports are sealed from each other and only filtrate is recovered from the module.

### EXAMPLE 1

A TFF module was made with a feed screen having an injection molded thermoplastic elastomeric gasket made from Santoprene® 80 durometer elastomer and 0.127mm (.005 inch) in height from each side of the screen. One layer of a composite regenerated cellulose membrane, PL composite, a relatively easily compressible membrane available from Millipore Corporation, was used in the module.

A comparison module, known as a PELLICON ® Maxi cassette, available from Millipore Corporation of Bedford, Massachusetts was constructed similarly to the one above, except that the feed screen seal of standard epoxy was used. This seal was flush with the surface of the screen.

Both were tested in a PELLICON® SS benchtop manifold, available from Millipore Corporation of Bedford, Massachusetts at 350 inlbs torque. Each was exposed to a series of 5 alternating cold/hot cycles using water as the fluid. The hot cycle was at a feed pressure of 413.7KPa (60 psi) and then a retentate pressure of 241.3KPa (35 psi) at 50°C for two hours. The cold cycle was static storage in a refrigerator at 5°C for 18 hours. Integrity of the seal in each cassette was tested at 68.9KPa (10 psi) intervals up to 758.4 KPa (110 psi) between each cycle.

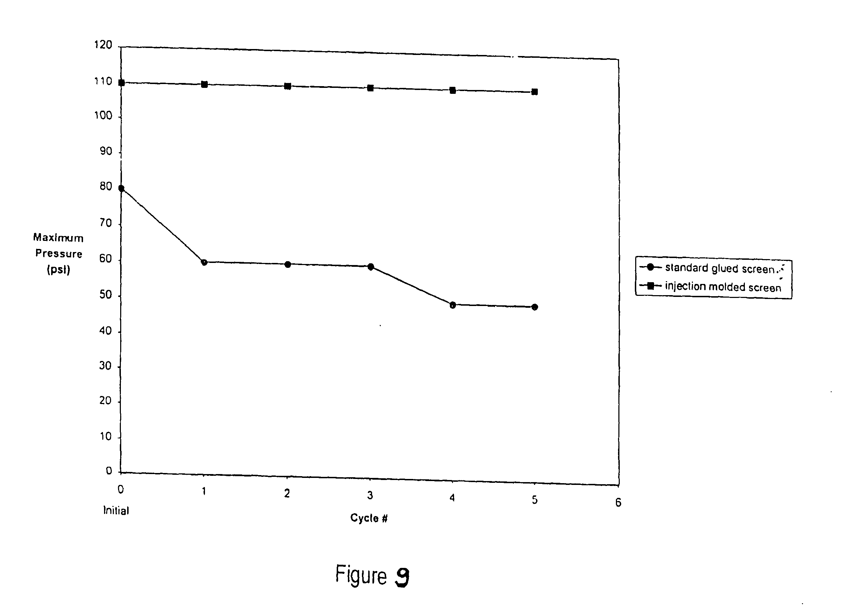

The integrity results were plotted in the graph of Figure 9 for both devices. As can be clearly seen the molded gasket device maintained its integrity throughout the test. The traditional cassette failed to achieve the high initial pressure resistance of the module of the present invention (551.5 vs 758.4 KPa) (80 vs 110psi) and it exhibited decreased sealing ability with increasing cycles.

The present invention has several advantages over the currently available devices.

First and foremost, it allows for the use of more compressible membranes than has been possible before, such as composite cellulose membranes. These membranes are highly efficient but due to their structure are easily compressible causing leakage to occur. The present invention overcomes the sealing problem created by such membranes thereby allowing for an entire new class of membranes to be used in filtration devices.

Second, it allows for the use of higher pressures in these applications, either with the traditional membranes or the newer more compressible membranes. Likewise, it is resilient in alternating hot/cold cycles which are quite common in filtration applications (cold for filtration, hot for inter batch cleaning). As the data clearly shows such thermal cycling has no effect on the performance of the device utilizing the current invention.

Third, it allows for different port sealing geometries other than circular, and overall smaller diameter sealing areas than is possible with glued ports.

It allows for the use of thicker screens and /or more open screens or filter membranes as the there is no overfilling of the screens or membranes as occurs in gluing when using very open screens or membranes.

It allows for the use of formed in placed sealing devices in the form of gaskets with controlled formation of the devices and little if any spreading of the material beyond the desired area. This is something that is not possible with epoxies and urethanes today.

It also allows for the sealing devices which have an ease of formation and application, low extractables, low absorption/desorption of components from the fluid being filtered.

Used as formed in place seals, one obtains an integral seal on the device which has several advantages in the ease of assembly and use, the assurance that the seal is always retained at the right location and cannot be mis-aligned or mis-sealed. Additionally, the seal eliminates any dead space between the seal and the filler component to which it is bonded in which a microorganism such as a bacteria, yeast, mold or virus could otherwise grow and threaten the integrity and sanitary condition of the filter.

The use of thermoplastics and thermoplastic elastomers offer increased cleanliness and lower levels of extractables than that found with the current urethanes, epoxies or silicones used in such devices.

## Claims

1. A filtration device comprising
a screen layer or a membrane layer and one or more openings (3,5,7;13,15,17;23,24,25) formed in said screen layer or membrane layer,
at least one (3;13;24) of said openings having a sealing device (9;19) for establishing a liquid tight seal around said opening(s) (3;13;24),
said sealing device (9;19) is molded in place, and is an elastomeric material selected from the group consisting of thermoplastics, thermoplastic elastomers, thermoset elastomers and rubber, both natural and synthetic, **characterized in that** said sealing device (9;19) is in a form of a gasket which extends through said screen layer or membrane layer and has a thickness greater than that of said screen layer or membrane layer and said thickness of said gasket extends from at least one side of said screen layer or membrane layer so as to be raised above the surface adjacent the opening.

2. The filtration device of claim 1, wherein said screen layer forms a feed screen (20) or a filtrate screen for a filter device, which feed/filtrate screen contains a plurality of said openings forming ports, said feed/filtrate screen having a relatively uniform thickness and a series of two or more ports (23,24,25) along at least one of its peripheral edges, at least one (23) of said ports having said sealing device in the form of said gasket extending from at least one side of said feed/filtrate screen.

3. The filtration device of claim 1 or 2 wherein the gasket extends from about 0.0254 to about 0.381 mm (about 0.001 to about 0.015 inch) above at least one side of the feed/filtrate screen or membrane layer.

4. The filtration device of claim 3 wherein the gasket extends at least 0.0254 mm (0.001 inch), preferably at least 0.0508 mm (0.002 inch), preferably at least 0.127 mm (0.005 inch) above said at least one side of the feed/filtrate screen or membrane layer.

5. The filtration device of any one of claims 1 to 4 wherein the gasket is formed by injection molding.

6. The filtration device of any one of claims 1 to 5 wherein the gasket is in a shape selected from the group consisting of a circle, oval and polygon.

7. The filtration device of claim 6 wherein the gasket is in the shape of a polygon and the polygon is selected from the group consisting of triangles, rectangles, pentagons, hexagons, heptagons, octagons, nonagons and decagons.

8. A filtration module comprising:
at least one membrane layer (33),
at least one feed screen (31) formed by a filtration device as defined in any one of claims 2 to 7, and
at least one filtrate screen (32) formed by a filtration device as defined in any one of claims 2 to 7, said feed screen (31) and said filtrate screen (32) being arranged on opposite sides of the membrane layer (33) to insure fluid flows through a port on the feed screen (31) into the feed screen (31), from the feed screen (31) through the membrane layer (33) and into the filtrate screen (32) and through the one or more ports of the filtrate screen (32) to an exit from the module.

9. The filtration module of claim 8 wherein the height of the gasket is used to vary the channel height of the feed screen (31).

10. The filtration module of claim 8 wherein the height of the gasket is used to vary the channel height of the filtrate screen (32).

11. The filtration module of any one of claims 8 to 10 wherein the module is capable of withstanding pressures of from about 344.7 to about 758.4 kPa (from about 50 to about 110 psi) without leaking.

12. The filtration module of any one of claims 8 to 11 wherein the membrane layer (33) is made of a material selected from the group consisting of olefins, metallocene olefinic polymers, PFA, MFA, PTFE, polycarbonate, vinyl copolymers, polyamides, polyesters, cellulose, cellulose acetate, regenerated cellulose, cellulose composites, polysulphone, polyethersulphone, polyarylsulphone, polyphenylsulphone, polyacrylonitrile, polyvinylidene fluoride (PVDF), and blends thereof.

13. The filtration module of any one of claims 8 to 12 wherein one or more sealing rims is/are formed upon the surface of an endcap layer.

## Patentansprüche

1. Filtervorrichtung mit
einer Screen- bzw. Siebschicht oder einer Membranschicht und einer oder mehreren Öffnung(en) (3,5,7;13,15,17; 23,24,25), die in der Siebschicht oder der Membranschicht ausgebildet sind,
wobei mindestens eine (3;13;24) der Öffnungen eine Dichtungsvorrichtung (9;19) zum Herstellen einer flüssigkeitsdichten Dichtung um die Öffnung(en) (3;13;24) herum aufweist,
wobei die Dichtungsvorrichtung (9;19) an Ort und Stelle geformt ist und ein elastomeres Material ist, das aus der aus thermoplastischen Stoffen, thermoplastischen Elastomeren, bei Wärme aushärtenden Elastomeren und sowohl natürlichen als auch synthetischen Gummi umfassenden Gruppe ausgewählt ist, **dadurch gekennzeichnet, dass** die Dichtungsvorrichtung (9;19) die Form einer Dichtungslage aufweist, die sich durch die Siebschicht oder Membranschicht erstreckt und eine größere Dicke aufweist als die der Siebschicht oder Membranschicht,
wobei sich die Dicke der Dichtungslage von mindestens einer Seite der Siebschicht oder Membranschicht so erstreckt, dass sie nahe der Öffnung über die Oberfläche erhaben ist.

2. Filtervorrichtung nach Anspruch 1, wobei die Siebschicht ein Feed- bzw. Einspeisesieb (20) oder ein Filtratsieb für eine Filtervorrichtung bildet, wobei das Einspeise-/Filtratsieb mehrere Öffnungen enthält, die Anschlüsse bilden, das Einspeise-/Filtratsieb eine relativ gleichmäßige Dicke und eine Reihe von zwei oder mehreren Anschlüssen (23,24,25) entlang mindestens einer seiner Umfangsränder aufweist, und mindestens einer (23) der Anschlüsse die Dichtungsvorrichtung in der Form der sich von mindestens einer Seite des Einspeise-/Filtratsiebs erstreckenden Dichtungslage aufweist.

3. Filtervorrichtung nach Anspruch 1 oder 2, wobei sich die Dichtungslage von etwa 0,0254 bis etwa 0,381 mm (etwa 0,001 bis etwa 0,015 Inch) über mindestens einer Seite des Einspeisefiltratsiebs oder der Membranschicht erstreckt.

4. Filtervorrichtung nach Anspruch 3, wobei sich die Dichtungslage mindestens 0,0254 mm (0,001 Inch), vorzugsweise mindestens 0,0508 mm (0,002 Inch), bevorzugt zumindest 0,127 mm (0,005 Inch) über die mindestens eine Seite des Einspeise-/Filtratsiebs oder der Membranschicht erstreckt.

5. Filtervorrichtung nach einem der Ansprüche 1 bis 4, wobei die Dichtungslage durch Spritzgießen gebildet ist.

6. Filtervorrichtung nach einem der Ansprüche 1 bis 5, wobei die Dichtungslage eine Form aufweist, die aus der aus einem Kreis, einem Oval und einem Polygon gebildeten Gruppe ausgewählt ist.

7. Filtervorrichtung nach Anspruch 6, wobei die Dichtungslage die Form eines Vielecks aufweist, und das Vieleck aus der aus Dreiecken, Rechtecken, Fünfecken, Sechsecken, Siebenecken, Achtecken, Neunecken und Zehnecken gebildeten Gruppe ausgewählt ist.

8. Filtermodul mit:
mindestens einer Membranschicht (33),
mindestens einem Feed- bzw. Einspeisesieb (31), das durch eine Filtervorrichtung gebildet ist, wie sie in einem der Ansprüche 2 bis 7 definiert ist, und
mindestens einem Filtratsieb (32), das durch eine Filtervorrichtung gebildet ist, wie sie in einem der Ansprüche 2 bis 7 definiert ist, wobei das Einspeisesieb (31) und das Filtratsieb (32) an gegenüberliegenden Seiten der Membranschicht (33) angeordnet sind, um sicherzustellen, dass Fluid durch einen Anschluß am Einspeisesieb (31) in das Einspeisesieb (31), von dem Einspeisesieb (31) durch die Membranschicht (33) und in das Filtratsieb (32) sowie durch den einen oder die mehreren Anschlüsse des Filtratsiebs (32) zu einem Ausgang aus dem Modul strömt.

9. Filtermodul nach Anspruch 8, wobei die Höhe der Dichtungslage dazu verwendet wird, die Kanalhöhe des Einspeisesiebs (31) zu variieren.

10. Filtermodul nach Anspruch 8, wobei die Höhe der Dichtungslage dazu verwendet wird, die Kanalhöhe des Filtratsiebs (32) zu variieren.

11. Filtermodul nach einem der Ansprüche 8 bis 10, wobei das Modul Drücken von etwa 344,7 bis etwa 758,4 kPa (von etwa 50 bis etwa 110 psi) ohne Leckage widerstehen kann.

12. Filtermodul nach einem der Ansprüche 8 bis 11, wobei die Membranschicht (33) aus einem Material hergestellt ist, das aus der aus Olefinen, Metallocenolefinpolymeren, PFA, MFA, PTFE, Polycarbonat, Vinylcopolymeren, Polyamiden, Polyestern, Cellulose, Celluloseacetaten, regenerierter Cellulose, Cellulose-Zusammensetzungen, Polysulfonen, Polyethersulfonen, Polyarylsulfonen, Polyphenylsulfonen, Polyacrylonitrilen, Polyvinylidenfluorid (PVDF) und Mischungen hiervon ausgewählt ist.

13. Filtermodul nach einem der Ansprüche 8 bis 12, wobei einer oder mehrere Dichtungsrand/Dichtungsränder auf der Oberfläche einer Endkappenschicht ausgebildet ist/sind.

## Revendications

1. Dispositif de filtration comprenant
une couche de tamis ou une couche de membrane et une ou plusieurs ouvertures (3, 5, 7 ; 13, 15, 17 ; 23, 24, 25) formées dans ladite couche de tamis ou couche de membrane,
au moins une ouverture (3 ; 13 ; 24) parmi lesdites ouvertures comportant un dispositif d'étanchéité (9 ; 19) destiné à établir une étanchéité aux liquides autour de ladite ou desdites ouvertures (3 ; 13 ; 24),
ledit dispositif d'étanchéité (9 ; 19) est moulé en place et est en un matériau élastomère sélectionné parmi le groupe constitué des matières thermoplastiques, des élastomères thermoplastiques, des élastomères thermodurcissables et de caoutchouc, à la fois naturel et synthétique,
**caractérisé en ce que**
ledit dispositif d'étanchéité (9 ; 19) se présente sous la forme d'un joint d'étanchéité qui s'étend à travers ladite couche de tamis ou couche de membrane et qui présente une épaisseur supérieure à celle de ladite couche de tamis ou couche de membrane et ladite épaisseur dudit joint d'étanchéité s'étend depuis au moins un côté de ladite couche de tamis ou couche de membrane de façon à être surélevé au-dessus de la surface adjacente à l'ouverture.

2. Dispositif de filtration selon la revendication 1, dans lequel ladite couche de tamis forme un tamis de distribution (20) ou un tamis de filtrat destiné à un dispositif de filtre, lequel tamis de distribution/filtrat contient une pluralité desdites ouvertures formant des orifices, ledit tamis de distribution/filtrat présentant une épaisseur relativement uniforme et une série de deux orifices ou plus (23, 24, 25) le long au moins d'un de ses bords périphériques, au moins un orifice (23) desdits orifices comportant ledit dispositif d'étanchéité sous la forme dudit joint d'étanchéité s'étendant depuis au moins un côté dudit tamis de distribution/filtrat.

3. Dispositif de filtration selon la revendication 1 ou 2, dans lequel le joint d'étanchéité s'étend d'environ 0,0254 à 0,381 mm (environ 0,001 à environ 0,015 pouce) au-dessus d'au moins un côté du tamis de distribution/filtrat ou couche de membrane.

4. Dispositif de filtration selon la revendication 3, dans lequel le joint d'étanchéité s'étend au moins de 0,0254 mm (0,001 pouce), de préférence au moins de 0,0508 mm (0,002 pouce), de préférence au moins de 0,127 mm (0,005 pouce) au-dessus dudit au moins un côté du tamis de distribution/filtrat ou couche de membrane.

5. Dispositif de filtration selon l'une quelconque des revendications 1 à 4, dans lequel le joint d'étanchéité est formé par moulage par injection.

6. Dispositif de filtration selon l'une quelconque des revendications 1 à 5, dans lequel le joint d'étanchéité se présente sous une forme sélectionnée parmi le groupe constitué d'un cercle, d'un ovale et d'un polygone.

7. Dispositif de filtration selon la revendication 6, dans lequel le joint d'étanchéité se présente sous la forme d'un polygone et le polygone est sélectionné parmi le groupe constitué de triangles, de rectangles, de pentagones, d'hexagones, d'heptagones, d'octogones, de nonagones et de décagones.

8. Module de filtration comprenant :
au moins une couche de membrane (33),
au moins un tamis de distribution (31) formé par un dispositif de filtration selon l'une quelconque des revendications 2 à 7, et
au moins un tamis de filtrat (32) formé par un dispositif de filtration selon l'une quelconque des revendications 2 à 7, ledit tamis de distribution (31) et ledit tamis de filtrat (32) étant agencés sur les côtés opposés de la couche de membrane (33) pour assurer des écoulements de fluide à travers un orifice sur le tamis de distribution (33) jusque dans le tamis de distribution (31), depuis le tamis de distribution (31) à travers la couche de membrane (33) et jusque dans le tamis de filtrat (32) et à travers les uns ou plusieurs orifices de tamis de filtrat (32) vers une sortie du module.

9. Module de filtration selon la revendication 8, dans lequel la hauteur du joint d'étanchéité est utilisée pour faire varier la hauteur du canal du tamis de distribution (31).

10. Module de filtration selon la revendication 8, dans lequel la hauteur du joint d'étanchéité est utilisée pour faire varier la hauteur du canal du tamis de filtrat (32).

11. Module de filtration selon l'une quelconque des revendications 8 à 10, dans lequel le module est capable de supporter des pressions d'environ 344,7 à environ 758,4 kPa (d'environ 50 à environ 110 psi) sans fuite.

12. Module de filtration selon l'une quelconque des revendications 8 à 11, dans lequel la couche de membrane (33) est constituée d'un matériau sélectionné parmi le groupe constitué d'oléfines, de polymères oléfiniques de métallocène, du PFA, du MFA, du PTFE, du polycarbonate, de copolymères de vinyle, de polyamides, de polyesters, de la cellulose, de l'acétate de cellulose, de la cellulose régénérée, de composites de cellulose, de la polysulfone, de la polyéthersulfone, de la polyarylsulfone, de la polyphénylsulfone, du polyacrylonitrile, du polyfluorure de vinylidène (PVDF) et de mélanges de ceux-ci.

13. Module de filtration selon l'une quelconque des revendications 8 à 12, dans lequel un ou plusieurs rebords d'étanchéité est/sont formé(s) sur la surface d'une couche de coiffe.
